# EUROPEAN PATENT APPLICATION

(11) **EP 4 733 759 A1**
(43) Date of publication of application: **29.04.2026**
(21) Application number: 24825695.0
(22) Date of filing: 31.05.2024
(51) Int. Cl.: G01N 33/48, G01N 1/28, G01N 1/30, G01N 33/53

(54) **STAINING CONDITION EVALUATION METHOD**

(30) Priority: 21.06.2023 JP 2023101953
(71) Applicant: SCREEN Holdings Co., Ltd., Kyoto-shi, Kyoto 602-8585 (JP)
(72) Inventor: OGI, Hiroshi, Kyoto-shi, Kyoto 602-8585 (JP); MORIWAKI, Sanzo, Kyoto-shi, Kyoto 602-8585 (JP)
(74) Representative: Goddar, Heinz J.
(86) International application number: PCT/JP2024/020090
(87) International publication number: WO 2024/262288

(57) **Abstract**

A staining-condition evaluation method of evaluating a staining condition for a specimen in immunostaining includes the step of applying a primary antibody to a test specimen under one staining condition (step S11), the step of applying a secondary antibody and a chromogenic substrate to the test specimen after step S11 (step S12), the step of inactivating or removing the primary antibody on the test specimen after step S12 (step S14), the step of applying a secondary antibody and a chromogenic substrate to the test specimen after step S14 (step S16), and the step of determining the propriety or impropriety of the above-described one staining condition by checking whether or not there is a stained cell in the test specimen after step S16 (step S17). This facilitates the above-described determination of the propriety or impropriety of one staining condition in step S11.

## Description

### TECHNICAL FIELD

The present invention relates to a technique for evaluating a staining condition for a specimen in immunostaining.

### CROSS-REFERENCE TO RELATED APPLICATIONS

This application claims priority benefit of Japanese Patent Application No. JP2023-101953 filed in the Japan Patent Office on June 21, 2023, the entire disclosure of which is incorporated herein by reference.

### BACKGROUND ART

In recent year's research in medical or biological sciences, biological specimens such as tissue specimens or cell specimens are analyzed in units of single cells for the purpose of the elucidation of mechanisms such as disease mechanisms, biological mechanisms, or drug action mechanisms. For example, immunostaining analysis realize quantitative and qualitative analysis of biological molecules such as protein by staining the biological molecules to measure their staining conditions.

The aforementioned immunostaining analysis requires staining conditions for specimens to become suitable for analysis. For example, in the blood smear preparing apparatus disclosed in Japanese Patent Application Laid-Open No. 2011-185895 (Document 1), when a undiluted stain solution is replaced, staining conditions for specimens (e.g., the staining time or the dilution rate of the undiluted stain solution) are changed based on the difference between the average nuclear G-value of white blood cells and a target nuclear G-value in test-stained specimens in order to reduce differences depending on the manufacturer or between lots of the undiluted stain solution and thereby equalize the staining conditions for specimens.

Japanese Unexamined Patent Application Publication (Translation of PCT Application) No. 2020-523614 (Document 2) proposes to provide a detection area and a control area on a process recording slide for immunostaining, the detection area being a space for detection by immunostaining, the control area being a reference space for qualitative or quantitative determination of the color density of a stained tissue or the like.

Meanwhile, as the immunostaining analysis, multiple immunostaining is known in which immunostaining, imaging, and color removal are repeatedly performed multiple times on one specimen while changing antibodies or the like used for immunostaining. In the multiple immunostaining, if the immunostaining using one antibody is performed under an inappropriate condition such as an inappropriate concentration of the antibody or an inappropriate reaction time of the antibody, not only the immunostaining using the antibody but also subsequent immunostaining using other antibodies may be adversely affected, which may result in a decrease in analysis accuracy.

### SUMMARY OF THE INVENTION

The present invention aims to facilitate determination of the propriety or impropriety of a staining condition.

Aspect 1 of the present invention is a staining-condition evaluation method of evaluating a staining condition for a specimen in immunostaining. The staining-condition evaluation method includes a) applying a primary antibody to a test specimen under one staining condition, b) after the process a), applying a secondary antibody and a chromogenic substrate to the test specimen, c) after the process b), inactivating or removing the primary antibody on the test specimen, d) after the process c), applying the secondary antibody and the chromogenic substrate to the test specimen, and e) after the process d), determining propriety or impropriety of the one staining condition by checking whether or not there is a stained cell in the test specimen.

According to the present invention, it is possible to facilitate the determination of the propriety or impropriety of the staining condition.

Aspect 2 of the present invention is the staining-condition evaluation method according to Aspect 1. The staining-condition evaluation method further includes, between the processes b) and c), determining propriety or impropriety of the one staining condition by checking whether or not there is a stained cell in the test specimen.

Aspect 3 of the present invention is the staining-condition evaluation method according to Aspect 1 or 2, in which the checking of whether or not there is a stained cell in the process e) is conducted using a trained model created by machine learning.

Aspect 4 of the present invention is the staining-condition evaluation method according to Aspect 1 or 2 (or according to any one of Aspects 1 to 3). The process e) involves acquiring a staining position that indicates a position of a stained cell in a first image and checking whether or not there is a stained cell in the test specimen depending on whether or not there is a stained cell at the stained position in a second image, the first image being acquired by capturing an image of the test specimen between the processes b) and c), the second image being acquired by capturing an image of the test specimen after the process d).

Aspect 5 of the present invention is the staining-condition evaluation method according to Aspect 1 or 2 (or according to any one of Aspects 1 to 4). Before the process a), a slide with the test specimen and another test specimen placed thereon is prepared. In the process a), the primary antibody is applied to the other test specimen under another staining condition. In the process b), the secondary antibody and the chromogenic substrate are also applied to the other test specimen. In the process c), the primary antibody on the other test specimen is also inactivated or removed. In the process d), the secondary antibody and the chromogenic substrate are also applied to the other test specimen. In the process e), propriety or impropriety of the other staining condition is also determined by checking whether or not there is a stained cell in the other test specimen.

Aspect 6 of the present invention is the staining-condition evaluation method according to Aspect 1 or 2 (or according to any one of Aspects 1 to 5). The staining-condition evaluation method further includes, between the processes c) and d), applying another primary antibody to the test specimen under another staining condition. A cell stained using the primary antibody is different from a cell stained using the other primary antibody. In the process e), the one staining condition is determined to be appropriate when a cell is stained in a specific manner in a first image, when a cell different from the cell stained in the first image is stained in a specific manner in a second image, and when the cell stained in the first image is not stained in the second image, the first image being acquired by capturing an image of the test specimen between the processes b) and c), the second image being acquired by capturing an image of the test specimen after the process d).

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a flowchart showing a procedure for evaluating a staining condition according to a first embodiment.
Fig. 2 is a diagram showing one example of a stained image.
Fig. 3 is a diagram showing another example of a stained image.
Fig. 4 is a diagram showing another example of a stained image.
Fig. 5 is a diagram showing a configuration of a computer.
Fig. 6 is a plan view of a slide used in a staining-condition evaluation method according to a second embodiment.
Fig. 7 is a flowchart showing part of a procedure for evaluating a staining condition according to a third embodiment.

### DESCRIPTION OF EMBODIMENTS

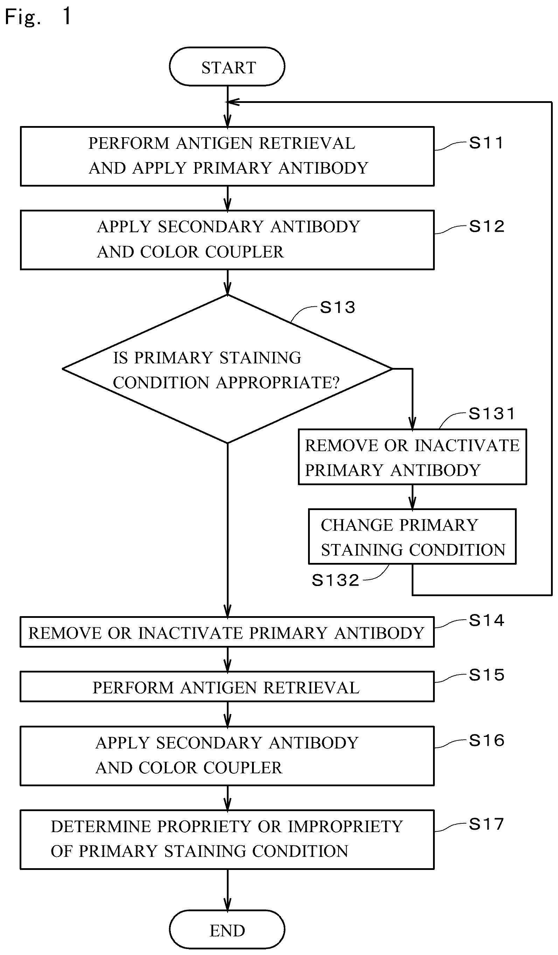

Fig. 1 is a flowchart showing a procedure for evaluation in a staining-condition evaluation method according to a first embodiment of the present invention. The staining-condition evaluation method is used when evaluating a staining condition for a specimen (e.g., a biological specimen) in immunostaining.

For example, the staining-condition evaluation method may be used to evaluate a staining condition in a sequential multiple immunostaining. The sequential multiple immunostaining is multiple immunostaining in which immunostaining, observation (e.g., imaging), and color removal are repeatedly performed multiple times on one specimen while changing antibodies or the like used in immunostaining. The following description is given regarding a procedure for evaluating the propriety or impropriety of a staining condition for the N-th immunostaining (N is an integer greater than or equal to one) among multiple repetitions of immunostaining during sequential multiple immunostaining.

In the staining-condition evaluation method, first, a test specimen that is used in the evaluation of a staining condition is prepared. For example, the test specimen is obtained from the same tissue as a specimen that is to be stained and analyzed in the aforementioned sequential multiple immunostaining. The test specimen is then subjected to antigen retrieval (e.g., heat treatment or enzyme treatment) and the application of a primary antibody under a staining condition with which the N-th immunostaining is considered to be carried out in the above-described sequential multiple immunostaining (step S11). The primary antibody is a primary antibody that is used in the above-described N-th immunostaining.

The primary antibody is an immunoglobulin that binds to a specific antigen (e.g., protein, peptide, or small molecules) and binds to the antigen with high affinity and specificity. Examples of the primary antibodies that can be used include antibodies derived from various animal species such as a mouse, a rabbit, a goat, and a chicken.

The above-described staining condition in step S11 (hereinafter, also referred to as the "primary staining condition") includes, for example, at least one of the concentration of the primary antibody applied to the test specimen and the time of applying the primary antibody to the test specimen (i.e., the reaction time). The primary staining condition may also include, for example, a treatment condition for antigen retrieval. In the case where antigen retrieval is heat treatment, the treatment condition includes, for example, at least one of the pH of an antigen activation solution used in the antigen retrieval and the temperature and time of heating the test specimen.

When step S11 ends, a secondary antibody and a chromogenic substrate are applied to the test specimen under a staining condition with which the above-described N-th immunostaining is to be carried out (hereinafter, also referred to as the "secondary staining condition") (step S12). As a result, specific cells or the like that bind to the primary antibody are stained in the test specimen. The secondary antibody and the chromogenic substrate are those used in the above-described N-th immunostaining.

The secondary antibody is an antibody that binds to the primary antibody used in step S11 and corresponds to an antibody derived from the animal species related to the production of the primary antibody. For example, in the case where the primary antibody used in step S11 is a mouse-derived antibody, the secondary antibody that is used in step S12 is an anti-mouse antibody. As the chromogenic substrate, various chromogenic substrates (e.g., AEC (3-amino-9-ethylcarbazole)) that develop colors in response to the labelling of the secondary antibody are usable.

Thereafter, the stained test specimen is observed to check whether or not there is a cell or the like stained in the test specimen (hereinafter, also referred to as a "stained cell"). Then, the propriety or impropriety of the primary staining condition in step S11 is determined based on the result of checking the presence or absence of a stained cell (step S13).

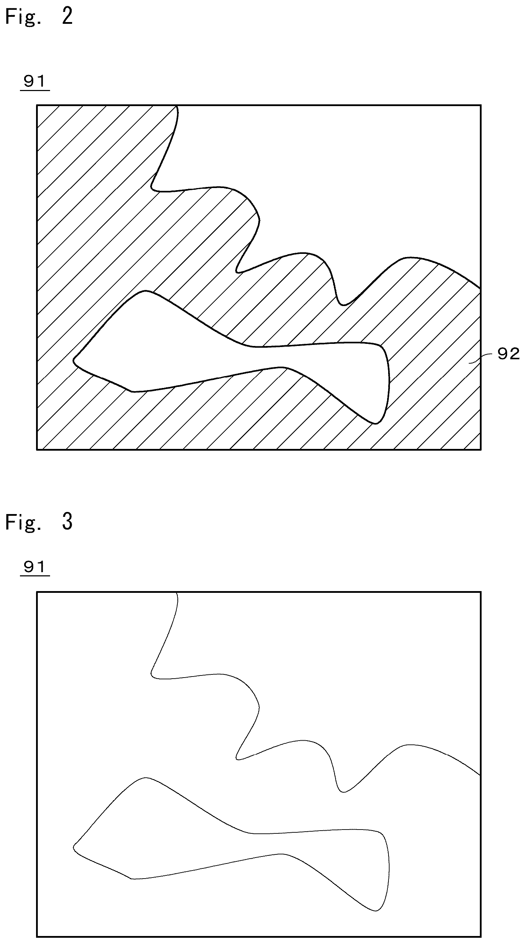

In step S13, for example, an image of a part or whole of the test specimen stained in steps S11 and S12 is captured to acquire an image (hereinafter, also referred to as a "stained image"). Fig. 2 is a diagram showing one example of a stained image 91. In the stained image 91 shown in Fig. 2, an area 92 that is stained (i.e., an area where stained cells are clustered; hereinafter also referred to as the "stained area 92") is cross-hatched.

Then, the presence or absence of a stained cell is checked by visual inspection of the stained image 91 by the operator who carries out immunostaining. When the presence of a stained cell is confirmed in the stained image 91, the operator determines that the primary staining condition used in step S11 is appropriate. On the other hand, when the presence of a stained cell is substantially not confirmed in the stained image 91 (i.e., substantially the stained area 92 does not exist), the operator determines that the primary staining condition used in step S11 is inappropriate (e.g., due to an insufficient concentration or reaction time of the primary antibody). In step S13, the primary staining condition used in step S11 may be determined to be inappropriate even in cases such as where the distribution of stained cells in the stained image 91 has no specificity.

If the primary staining condition is determined to be inappropriate in step S13, the test specimen is cleaned to remove the primary and secondary antibodies and the chromogenic substrate on the test specimen. The primary and secondary antibodies on the test specimen may also be inactivated (step S131). That is, in step S131, the primary antibody on the test specimen is at least either inactivated or removed. The cleaning of the test specimen is carried out using, for example, phosphate-buffered physiological saline (PBS) or Tris-buffered physiological saline (TBS). The cleaning of the test specimen may be carried out multiple times. The inactivation of the primary and secondary antibodies may be carried out by, for example, heat treatment or the like in which the test specimen is immersed in extremely hot water. The inactivation of the primary and secondary antibodies may be carried out by any of various other methods. The removal of the chromogenic substrate (to be precise, the removal of color developed by color precipitates derived from the chromogenic substrate) may also be carried out by any of various methods. In the case where the chromogenic substrate is an AEC, for example, the chromogenic substrate may be removed by immersing and cleaning the test specimen in alcohol with a plurality of concentrations such as ethanol.

Thereafter, the primary staining condition for the application of the primary antibody is changed (step S132), and the processing returns to step S11 to perform steps S11 to S13. The change of the primary staining condition in step S132 includes, for example, an increase in the concentration of the primary antibody applied to the test specimen and/or an increase in the reaction time of the primary antibody in step S11.

Even in the case where the primary staining condition is determined to be appropriate in step S13, the test specimen is cleaned to remove the primary and secondary antibodies and the chromogenic substrate on the test specimen. The primary and secondary antibodies on the test specimen may also be inactivated (step S14). That is, the primary antibody on the test specimen is at least either inactivated or removed in step S14. The cleaning of the test specimen and the removal and/or inactivation of the primary and secondary antibodies in step S14 are carried out by, for example, the same method as used in step S131 described above. The cleaning of the test specimen and the removal and/or inactivation of the primary and secondary antibodies in step S14 are carried out under the same treatment condition as the treatment condition for cleaning and inactivation that are to be carried out between the above-described N-th immunostaining and the (N+1)-th immunostaining.

When step S14 ends, the antigen retrieval of the test specimen is carried out under the primary staining condition with which the (N+1)-th immunostaining is to be carried out in the above-described sequential multiple immunostaining (step S15). The antigen retrieval in step S15 may be carried out under the same condition as the condition for the antigen retrieval in step S11, or may be carried out under a different condition therefrom. When the antigen retrieval in step S15 and the inactivation of the primary and secondary antibodies in step S14 are both heat treatment, the inactivation of the primary and secondary antibodies (step S14) and the antigen retrieval (step S15) may be carried out in parallel with each other by one heat treatment.

When step S15 ends, a secondary antibody and a chromogenic substrate are applied to the test specimen under the secondary staining condition with which the aforementioned N-th immunostaining is to be carried out (step S16). The secondary antibody and the chromogenic substrate used in step S16 are those used in the N-th immunostaining and are of the same type as those used in step S12. The secondary staining condition used in step S16 may be the same as or different from the secondary staining condition used in step S12.

When step S16 ends, the test specimen with the secondary antibody and the chromogenic substrate applied thereto is observed to check the presence or absence of a stained cell in the test specimen. Then, the propriety or impropriety of the primary staining condition used in step S11 is determined based on the result of checking the presence or absence of a stained cell (step S17).

In step S17, for example, the presence or absence of a stained cell is checked by an operator's visual inspection of the stained image acquired by capturing an image of the test specimen. As shown in Fig. 3, if the presence of a stained cell is not substantially confirmed in stained image 91, this means that the primary antibody on the test specimen has almost completely been inactivated and/or removed in step S14. Thus, the primary staining condition used in step S11 is determined to be appropriate.

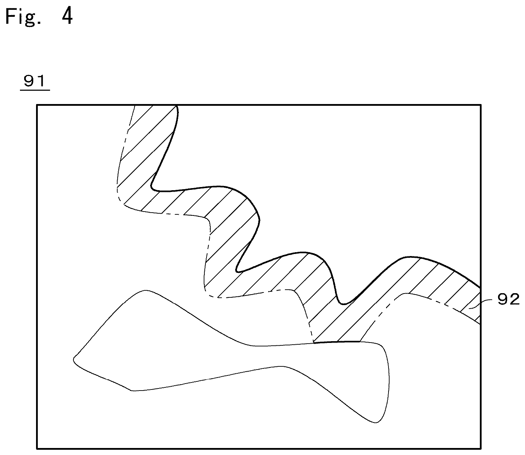

On the other hand, as shown in Fig. 4, if the presence of a stained cell is confirmed in the stained image 91 (i.e., if the stained area 92 exists), this means that the primary antibody remains active on the test specimen (i.e., stainability is carried over) even after the removal and/or inactivation of the primary antibody in step S14. Thus, the primary staining condition used in step S11 is determined to be inappropriate (e.g., due to a too high concentration of the primary antibody or a too long reaction time thereof).

If the primary staining condition is determined to be inappropriate in step S17, for example, a new test specimen is prepared, and steps S11 to S17 are performed after changing the primary staining condition. Then, steps S11 to S17 are repeated while changing a test specimen until an appropriate primary staining condition is acquired. Alternatively, steps S11 to S17 may be performed by, for example, instead of preparing a new test specimen, thoroughly cleaning and heat-treating (i.e., inactivating) the test specimen determined to be inappropriate in step S17 to almost completely remove and/or inactivate the primary and secondary antibodies and the chromogenic substrate on the test specimen.

When the appropriate primary staining condition for the above-described N-th immunostaining is acquired in step S17, for example, the propriety or impropriety of the primary staining condition for the (N+1)-th immunostaining, among multiple repetitions of immunostaining carried out during the sequential multiple immunostaining, is evaluated by using the test specimen used in the acquisition of the primary staining condition. Specifically, for example, the test specimen that has undergone step S17 is cleaned and/or heat-treated to remove and/or inactivate the secondary antibody and the chromogenic substrate thereon, and thereafter steps S11 to S17 are performed under a staining condition with which the (N+1)-th immunostaining and the (N+2)-th immunostaining are to be carried out. In the aforementioned staining-condition evaluation method, the propriety or impropriety of the primary staining condition may be evaluated for all of the multiped repetitions of immunostaining carried out during the sequential multiple immunostaining, or the propriety or impropriety of the primary staining condition may be evaluated for some of the multiple repetitions of immunostaining.

The determination of the propriety or impropriety of the primary staining condition in step S17 does not necessarily have to be carried out by an operator's visual inspection, and may be carried out in any of various methods. For example, the propriety or impropriety of the primary staining condition may be determined by a computer executing a program for evaluating a staining condition.

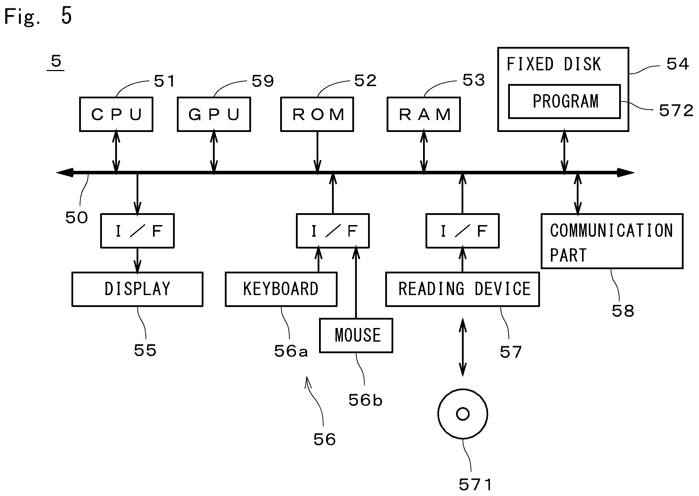

Fig. 5 is a diagram showing a configuration of a computer 5 as described above. The computer 5 has a common computer system configuration that includes a CPU 51, ROM 52. RAM 53, a fixed disk 54, a display 55, an input unit 56, a reader 57, a communicator 58, a GPU 59, and a bus 50. The CPU 51 performs a variety of arithmetic processing. The GPU 59 performs a variety of arithmetic processing related to image processing. The ROM 52 stores basic programs. The RAM 53 stores a variety of information. The fixed disk 54 stores information. The display 55 is a display unit that displays a variety of information such as images.

The input unit 56 includes a keyboard 56a and a mouse 56b that accept input from the operator. The reader 57 reads information from a computer-readable recording medium 571 such as an optical disk, a magnetic disk, a magneto-optical disk, or a memory card. The display 55, the keyboard 56a, the mouse 56b, and the reader 57 are connected to the bus 50 via interfaces I/F. The communicator 58 transmits and receives signals to and from devices or the like outside the computer 5. The bus 50 is a signal circuit that connects the CPU 51, the GPU 59, the ROM 52, the RAM 53, the fixed disk 54, the display 55, the input unit 56, the reader 57, and the communicator 58.

The computer 5 reads a program 572 in advance from the recording medium 571 via the reader 57 and stores the program in the fixed disk 54. The program 572 may be stored in the fixed disk 54 via a network. The CPU 51 and the GPU 59 execute arithmetic processing while using the RAM 53 or the fixed disk 54 in accordance with the program 572 for evaluating a staining condition. The CPU 51 and the GPU 59 function as an arithmetic section in the computer 5. As the arithmetic section, any configuration other than the CPU 51 and the GPU 59 may also be employed.

In step S17, the aforementioned checking of the presence or absence of a stained cell may be carried out by the computer 5 executing the program 572 while using a trained model created by machine learning. Specifically, an image of the test specimen with the secondary antibody and the chromogenic substrate applied thereto in step S16 is captured in step S17 to acquire a stained image. Then, the stained image is input to the trained model, and the presence or absence of a stained cell in the stained image is output from the trained model.

When the trained model has detected a stained cell in the stained image, the computer 5 displays, for example, the presence of the stained cell with characters or the like on the display 55. Alternatively, the stained image may be displayed on the display 55 with detected stained cell emphasized. On the other hand, when no stained cells have been detected in the stained image, for example, the absence of stained cells is displayed with characters or the like on the display 55.

The aforementioned trained model is created by subjecting an initial model for evaluating a staining condition to machine learning using a learning data set that is a cluster of images for learning. The learning data set includes images of specimens where stained cells exist and images of specimens where no stained cells exist. The machine learning is, for example, deep learning using a neural network. The training by deep learning is carried out using, for example, the U-Net. Note that the machine learning may be carried out by any method other than deep learning. The checking of the presence or absence of a stained cell by the above-described trained model in step S17 may also be used in the checking of the presence or absence of a stained cell in step S13.

In step S17, the aforementioned checking of the presence or absence of a stained cell may be carried out by the computer 5 executing the program 572, e.g., comparing two images of the test specimen. In this case, an image of the test specimen stained in steps S11 and S12 is captured in step S13 to acquire a first image. Moreover, an image of the test specimen with the secondary antibody and the chromogenic substrate applied thereto in step S16 is captured in step S17 to acquire a second image. Note that the first image may be acquired before or after step S13 as long as acquired between steps S12 and S14.

In step S17, a staining position that indicates the position of a stained cell in the first image is acquired by the computer 5 executing the program 572. Then, the presence or absence of a stained cell in the test specimen is checked depending on the presence or absence of a stained cell at the staining position in the second image. The presence or absence of a stained cell in the second image is checked by aligning the first and second images and then using the coordinates of the staining position on the first image. For example, the alignment of the first and second images may be carried out automatically by a known image registration technique, or may be carried out manually by the operator. The presence or absence of a stained cell in the second image may be checked at, for example, only the staining position in the first image, and is not checked in areas other than the staining position in the first image. This shortens the time required to check the presence or absence of a stained cell in the second image.

When a stained cell has been detected in the second image, for example, the computer 5 displays the presence of the stained cell with characters or the like on the display 55. Alternatively, the second image may be displayed on the display 55 with detected stained cell emphasized. On the other hand, when no stained cells have been detected in the stained image, for example, the absence of stained cells may be displayed with characters or the like on the display 55. Note that the aforementioned detection of a stained cell by comparison between the first and second images may be carried out by an operator's visual inspection.

As described thus far, the aforementioned staining-condition evaluation method of evaluating a staining condition for a specimen in immunostaining includes the step of applying a primary antibody to a test specimen under one staining condition (step S11), the step of applying a secondary antibody and a chromogenic substrate to the test specimen after step S11 (step S12), the step of inactivating or removing the primary antibody on the test specimen after step S12 (step S14), the step of applying a secondary antibody and a chromogenic substrate to the test specimen after step S14 (step S16), and the step of determining the propriety or impropriety of the above-described one staining condition by checking the presence or absence of a stained cell in the test specimen after step S16 (step S17).

This facilitates the determination of the propriety or impropriety of the above-described one staining condition (i.e., the primary staining condition) in step S11. Specifically, when the presence of a stained cell that would not possibly exist is confirmed in step S17, the primary staining condition used in step S11 is determined to be inappropriate due to, for example, a too high concentration of the primary antibody or a too long reaction time thereof. On the other hand, when the absence of stained cells is confirmed in step S17, the primary staining condition used in step S11 is determined to be appropriate.

Preferably, the staining-condition evaluation method further includes the step of, between steps S12 and S14, determining the propriety or impropriety of the primary staining condition by checking the presence or absence of a stained cell in the test specimen (step S13). By detecting the impropriety of the primary staining condition that can already be determined at the end of steps S11 and S12, it is possible to improve the efficiency of evaluating the staining condition without wasting the time to perform steps S14 to S17. Specifically, when the presence of a stained cell that should exist is not confirmed in step S13, the primary staining condition used in step S11 is determined to be inappropriate due to, for example, an insufficient concentration and/or reaction time of the primary antibody. On the other hand, when the presence of a stained cell is not confirmed in step S17, the primary staining condition used in step S11 is determined to be appropriate.

As described above, it is preferable that the checking of the presence or absence of a stained cell in step S17 is carried out using a trained model created by machine learning. This allows the presence or absence of a stained cell in the stained image to be checked automatically and accurately.

As described above, it is preferable in step S17 that the staining position indicating the position of a stained cell is acquired in the first image acquired by capturing an image of the test specimen between steps S12 and S14. It is also preferable that the presence or absence of a stained cell in the test specimen is checked depending on the presence or absence of a stained cell at the above-described staining position in the second image acquired by capturing an image of the test specimen after step S16. This improves the accuracy of checking the presence or absence of a stained cell in the second image. Besides, by checking the presence or absence of a stained cell at only the above-described staining position, it is possible to shorten the time required for the checking. Moreover, if the comparison between the first and second images is carried out using a computer, it is possible to automatically check the presence or absence of a stained cell in the stained image.

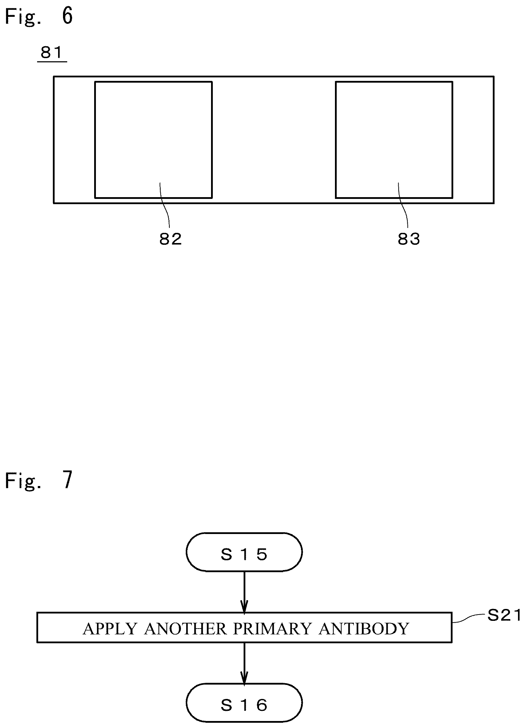

Next description is given regarding a staining-condition evaluation method according to a second embodiment of the present invention. Fig. 6 is a plan view showing a slide 81 that is used in the staining-condition evaluation method according to the second embodiment. The staining-condition evaluation method uses one slide 81 to determine the propriety or impropriety of a plurality of primary staining conditions in parallel with one another.

As shown in Fig. 6, the slide 81 has the aforementioned test specimen (hereinafter, indicated by a reference sign 82) and another test specimen 83 placed thereon. Like the test specimen 82, the test specimen 83 is acquired from the same tissue as a specimen that is to be stained and analyzed in the aforementioned sequential multiple immunostaining. Note that the slide 81 may have three or more test specimens placed thereon.

A procedure for evaluating staining conditions by using the slide 81 is described hereinafter with reference to Fig. 1. First, one slide 81 shown in Fig. 6 is created and prepared before step S11. Then, in step S11, the antigen retrieval of the test specimen 83 and the application of the primary antibody to the test specimen 83 are carried out in approximately parallel with the antigen retrieval of the test specimen 82 and the application of the primary antibody to the test specimen 82. The primary antibody applied to the test specimen 83 is the same as that applied to the test specimen 82. In step S11, the primary antibody is applied to the test specimen 83 under another primary staining condition different from the primary staining condition for the application of the primary antibody to the test specimen 82. For example, the other primary staining condition may be obtained by shifting a predetermined parameter (e.g., the concentration or reaction time of the primary antibody) by a predetermined amount from a primary staining condition with which the N-th immunostaining is considered to be carried out in the above-described sequential multiple immunostaining.

Then, in step S12, a secondary antibody and a chromogenic substrate are also applied to the test specimen 83 in approximately parallel with the application of the secondary antibody and the chromogenic substrate to the test specimen 82. As a result, specific cells or the like that bind to the primary antibody are also stained in the test specimen 83. The secondary antibody and the chromogenic substrate applied to the test specimen 83 are the same as those applied to the test specimen 82. In step S12, the secondary antibody and the chromogenic substrate are applied to the test specimen 83 under the same staining condition as the secondary staining condition for the test specimen 82.

In step S13, the presence or absence of a stained cell in the test specimen 83 is checked in parallel with the checking of the presence or absence of a stained cell in the test specimen 82, and the propriety or impropriety of the above-described other primary staining condition used in step S11 (i.e., the primary staining condition for the test specimen 83) is determined based on the checking result. When the primary staining conditions for both of the test specimens 82 and 83 are determined to be inappropriate in step S13, the primary and secondary antibodies and the chromogenic substrate on the test specimens 82 and 83 are removed and/or inactivated (step S131). Then, the primary staining conditions determined to be inappropriate are changed (step S132), and the processing returns to step S11 to perform steps S11 to S13.

When the primary staining condition for at least one of the test specimens 82 and 83 is determined to be appropriate in step S13, the primary and secondary antibodies and the chromogenic substrate on the test specimen 83 are also removed and/or inactivated in step S14, in approximately parallel with the removal and/or inactivation of the primary and secondary antibodies and the chromogenic substrate on the test specimen 82.

Then, antigen retrieval of the test specimen 83 is also carried out in step S15, in approximately parallel with the antigen retrieval of the test specimen 82. For example, the antigen retrieval of the test specimen 83 is carried out under the same condition as that for the antigen retrieval of the test specimen 82.

Then, a secondary antibody and a chromogenic substrate are also applied to the test specimen 83 in step S16, in approximately parallel with the application of the secondary antibody and the chromogenic substrate to the test specimen 82. The secondary antibody and the chromogenic substrate applied to the test specimen 83 are the same as those applied to the test specimen 82. In step S16, for example, the secondary antibody and the chromogenic substrate are applied to the test specimen 83 under the same staining condition as the secondary staining condition for the test specimen 82.

Thereafter, the presence or absence of a stained cell in the test specimen 83 is checked and the propriety or impropriety of the primary staining condition for the test specimen 83 is determined based on the result of checking the presence or absence of a stained cell in step S17, in approximately parallel with the determination of the propriety or impropriety of the primary staining condition for the test specimen 82. Specifically, when the presence of a stained cell in the test specimen 83 is substantially not confirmed, the above-described other primary staining condition for the test specimen 83 is determined to be appropriate. When the presence of a stained cell in the test specimen 83 is confirmed, the above-described other primary staining condition for the test specimen 83 is determined to be inappropriate (due to, for example, a too high concentration of the primary antibody or a too long reaction time thereof). Note that the test specimens 82 and 83 described above may be provided on different slides 81.

As described thus far, in the staining-condition evaluation method according to the second embodiment, the slide 81 with the test specimen 82 and the other test specimen 83 placed thereon is prepared before step S11. In step S11, the primary antibody is applied to the other test specimen 83 under the other staining condition (i.e., the other primary staining condition). In step S12, the secondary antibody and the chromogenic substrate are also applied to the other test specimen 83. In step S14, the primary antibody on the other test specimen 83 is also inactivated or removed. In step S16, the secondary antibody and the chromogenic substrate are also applied to the other test specimen 83. In step S17, the propriety or impropriety of the above-described other staining condition is also determined by checking the presence or absence of a stained cell in the other test specimen 83. This enables determining the propriety or impropriety of the two primary staining conditions in parallel with each other.

The slide 81 may have three or more test specimens placed thereon. In step S11, the primary antibody may be applied to the three or more test specimens under three or more different primary staining conditions. This enables determining the propriety or impropriety of the three or more primary staining conditions in parallel with one another.

Next description is given regarding a staining-condition evaluation method according to a third embodiment of the present invention. Fig. 7 is a diagram showing part of a procedure for evaluating a staining condition according to the third embodiment. In the staining-condition evaluation method, first, steps S11 to S15 shown in Fig. 1 are performed as in the first embodiment. Then, step S21 shown in Fig. 7 is performed between steps S15 and S16, and thereafter steps S16 and S17 shown in Fig. 1 are performed in approximately the same manner as in the first embodiment.

In step S21, another primary antibody different from the primary antibody used in step S11 is applied to a test specimen. For example, the other primary antibody may be a primary antibody that is used in the (N+1)-th immunostaining during the above-described sequential multiple immunostaining. The other primary antibody is an antibody of a different type from the aforementioned primary antibody (i.e., the primary antibody used in the N-th immunostaining). For example, the other primary antibody may be an antibody derived from the same animal species as the aforementioned primary antibody. A primary staining condition for the other primary antibody in step S21 (hereinafter, also referred to as "another staining condition") is a primary staining condition with which the above-described (N+1)-th immunostaining is considered to be carried out. The other staining condition may be different from or the same as the primary staining condition used in step S11. When the antigen retrieval in step S15 is not performed, step S21 is performed between steps S14 and S16. In step S16, a secondary antibody and a chromogenic substrate that are used in the (N+1)-th immunostaining are used under a secondary staining condition with which the (N+1)-th immunostaining is to be carried out during the above-described sequential multiple immunostaining.

On a test specimen targeted for the staining-condition evaluation method according to the third embodiment, cells stained using the primary antibody applied in step S11 are different from cells stained using the other primary antibody applied in step S21. Thus, when the removal and/or inactivation of the primary antibody is carried out favorably in step S14, the area where there are cells stained by the application of the secondary antibody and the chromogenic substrate in step S16 is different from and do not overlap with the area where there are cells stained by the application of the secondary antibody and the chromogenic substrate in step S12. On the other hand, when the removal and/or inactivation of the primary antibody is not carried out favorably in step S14, part of the area where there are cells stained by the application of the secondary antibody and the chromogenic substrate in step S16 overlaps with the area where there are cells stained by the application of the secondary antibody and the chromogenic substrate in step S12.

In the staining-condition evaluation method according to the third embodiment, an image of the test specimen stained in steps S11 and S12 is captured in step S13 to acquire a first image. Moreover, an image of the test specimen stained in steps S21 and S16 is captured in step S17 to acquire a second image. Note that the first image may be acquired before or after step S13 as long as acquired between steps S12 and S14.

In step S17, for example, the position of each stained cell in the first image is detected and the position of each stained cell in the second image is also detected by the computer 5 executing the program 572 shown in Fig. 5. Then, whether the cells in the first image are stained in a specific manner is checked, and whether the cells in the second image are stained in a specific manner is checked. Moreover, the first and second images are compared to determine whether the stained cells in the first image are not stained in the second image.

Then, the primary staining condition for the application of the primary antibody in step S11 is determined to be appropriate when the cells are stained in a specific manner in each of the first and second images and when the cells stained in the first image are confirmed not to be stained in the second image.

Otherwise, the primary staining condition is determined to be inappropriate. For example, when some or all of the stained cells in the first image are also stained in the second image, it is conceivable that the concentration of the primary antibody applied in step S11 is too high or the reaction time thereof is too long. When almost no cells are stained in the first image, it is conceivable that the concentration and/or reaction time of the primary antibody applied in step S11 are/is insufficient. When almost no cells are stained in the second image, it is conceivable that the concentration and/or reaction time of the other primary antibody applied in step S21 are/is insufficient.

For comparison of the aforementioned first and second images, the first and second images are aligned with each other. For example, the first and second images may be aligned automatically by a known image registration technique, or may be aligned manually by the operator.

The checking of whether or not the cells in each of the first and second images are stained in a specific manner may be carried out using, for example, a trained model created by machine learning. The trained model is created by subjecting an initial model for detecting specificity in the distribution of stained cells to machine learning using a learning data set that is a cluster of images for learning. The learning data set includes images of specimens where stained cells are distributed in a specific manner and images of specimens where stained cells are not distributed in a specific manner. The machine learning is, for example, deep learning using a neural network. The training by deep learning is carried out using, for example, the U-Net. Note that the machine learning may be carried out by any method other than deep learning.

In step S17, the aforementioned detection of specificity in the distributions of stained cells in the first and second images and the aforementioned duplicate detection of stained cells by comparison of the fist and second images may be carried out by an operator's visual inspection.

The above description is given using an example in which steps S11 and S12 and steps S21 and S16 correspond to consecutive two repetitions of immunostaining (e.g., the N-th immunostaining and the (N+1)-th immunostaining) among multiple repetitions of immunostaining carried out during sequential multiple immunostaining, but the present invention is not limited to this example. In the sequential multiple immunostaining, immunostaining using a primary antibody different from those used in steps S11 and S21 may also be carried out between steps S11 and S12 and steps S21 and S16 as long as steps S21 and S16 are performed after steps S11 and S12. In this case, the application of this primary antibody different from those used in steps S11 and S21 described above, the application of a secondary antibody and a chromogenic substrate that correspond to this primary antibody, and the removal and/or inactivation of this primary antibody and so on are also carried out similarly between steps S14 and S15 in the aforementioned staining-condition evaluation method. Note that this primary antibody is, for example, an antibody derived from animal species different from those used in steps S11 and S21.

As described thus far, the staining-condition evaluation method according to the third embodiment further includes the step of, between steps S14 and S16, applying another primary antibody to the test specimen under another staining condition (step S21). The cells stained using the primary antibody are different from the cells stained using the other primary antibody. In step S17, the aforementioned one staining condition (i.e., the primary staining condition in step S11) is determined to be appropriate when cells are stained in a specific manner in the first image acquired by capturing an image of the test specimen between steps S12 and S14, when cells different from those stained in the first image are stained in a specific manner in the second image acquired by capturing an image of the test specimen after step S16, and when the cells stained in the first image are not stained in the second image.

As a result, in two consecutive repetitions of immunostaining, the primary staining condition for the immunostaining that is carried out first can be set without adversely affecting the immunostaining that is carried out later. Accordingly, this staining-condition evaluation method is in particular suitable for the evaluation of staining conditions in sequential multiple immunostaining.

The aforementioned staining-condition evaluation methods may be modified in various ways.

For example, the determination of the propriety or impropriety of the primary staining condition in step S13 is not absolutely necessary. The acquisition of the first image in step S13 may be omitted. The acquisition of the second image in step S17 is also not absolutely necessary.

The antigen retrieval in steps S11 and S15 may be omitted.

The aforementioned staining-condition evaluation methods do not necessarily have to be used for the evaluation of staining conditions in sequential multiple immunostaining, and may be used for the evaluation of staining conditions in any other type of immunostaining. The specimens and the test specimens described above do not necessarily have to be biological specimens, and may be any other specimens.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

81 slide
82, 83 test specimen
S11 to S17, S21, S131, S132 step

## Claims

1. A staining-condition evaluation method of evaluating a staining condition for a specimen in immunostaining, the staining-condition evaluation method comprising:
a) applying a primary antibody to a test specimen under one staining condition;
b) after said process a), applying a secondary antibody and a chromogenic substrate to said test specimen;
c) after said process b), inactivating or removing said primary antibody on said test specimen;
d) after said process c), applying said secondary antibody and said chromogenic substrate to said test specimen; and
e) after said process d), determining propriety or impropriety of said one staining condition by checking whether or not there is a stained cell in said test specimen.

2. The staining-condition evaluation method according to claim 1, further comprising:
between said processes b) and c), determining propriety or impropriety of said one staining condition by checking whether or not there is a stained cell in said test specimen.

3. The staining-condition evaluation method according to claim 1 or 2, wherein
the checking of whether or not there is a stained cell in said process e) is conducted using a trained model created by machine learning.

4. The staining-condition evaluation method according to claim 1 or 2, wherein
said process e) involves acquiring a staining position that indicates a position of a stained cell in a first image and checking whether or not there is a stained cell in said test specimen depending on whether or not there is a stained cell at said stained position in a second image, the first image being acquired by capturing an image of said test specimen between said processes b) and c), the second image being acquired by capturing an image of said test specimen after said process d).

5. The staining-condition evaluation method according to claim 1 or 2, wherein
before said process a), a slide with said test specimen and another test specimen placed thereon is prepared,
in said process a), said primary antibody is applied to said another test specimen under another staining condition,
in said process b), said secondary antibody and said chromogenic substrate are also applied to said another test specimen,
in said process c), said primary antibody on said another test specimen is also inactivated or removed,
in said process d), said secondary antibody and said chromogenic substrate are also applied to said another test specimen, and
in said process e), propriety or impropriety of said another staining condition is also determined by checking whether or not there is a stained cell in said another test specimen.

6. The staining-condition evaluation method according to claim 1 or 2, further comprising:
between said processes c) and d), applying another primary antibody to said test specimen under another staining condition,
wherein a cell stained using said primary antibody is different from a cell stained using said another primary antibody, and
in said process e), said one staining condition is determined to be appropriate when a cell is stained in a specific manner in a first image, when a cell different from the cell stained in said first image is stained in a specific manner in a second image, and when the cell stained in said first image is not stained in said second image, the first image being acquired by capturing an image of said test specimen between said processes b) and c), the second image being acquired by capturing an image of said test specimen after said process d).
